# FASCICULE DE BREVET EUROPEEN

(11) **EP 2 501 615 B1**
(45) Date de publication et mention de la délivrance du brevet: **11.09.2013**
(21) Numéro de dépôt: 10779817.5
(22) Date de dépôt: 19.11.2010
(51) Int. Cl.: B64F 5/00, B25H 1/00, B65D 85/68, B66F 9/06

(54) **CHARIOT DE TRANSPORT D'UN MODULE DE MOTEUR D'AERONEF**
TRANSPORTKARREN FÜR EINE FLUGZEUGTRIEBWERKEINHEIT
TRANSPORT TROLLEY FOR AN AIRCRAFT ENGINE MODULE

(30) Priorité: 20.11.2009 FR 0958239
(43) Date de publication de la demande: 26.09.2012
(73) Titulaire: Snecma, 75015 Paris (FR)
(72) Inventeur: BOULANGER, Pascal, F-95830 Cormeilles En Vexin (FR); DESCHAMPS, Johnny, F-77670 Saint Mammes (FR); FOUGERES, Alain, F-77210 Avon (FR); MARCHAND, Jacques, F-77133 Machault (FR)
(74) Mandataire: Ilgart, Jean-Christophe
(86) Numéro de dépôt international: PCT/EP2010/067857
(87) Numéro de publication internationale: WO 2011/061306

(56) Documents cités:
- EP-A1- 1 518 783
- DE-U1- 20 023 688
- FR-A- 868 161
- FR-A1- 2 389 768
- US-A- 1 600 835
- US-A- 1 812 585
- US-A- 2 825 477
- US-A- 4 691 904

## Description

L'invention a trait à un chariot de transport d'un module de moteur d'aéronef.

Le transport d'un module de moteur d'aéronef préalablement à son assemblage est souvent difficile puisque ces modules sont des pièces volumineuses, lourdes mais délicates, et qu'il faut placer à une position précise d'accostage aux modules voisins pour réaliser l'assemblage du moteur. De plus, certains des modules doivent être retournés avant d'être montés, afin de vérifier qu'aucun corps étranger ne s'est introduit entre le rotor et le stator et n'est donc susceptible d'endommager le moteur quand il sera mis en marche.

Le procédé classique pour faire ces opérations consiste à utiliser un palan pour déposer le module sur un chariot non spécialisé ou sur une palette à roues, de déplacer le chariot jusqu'au lieu de l'assemblage du moteur et de soulever de nouveau le module par un palan pour réaliser le retournement et l'accostage. Ces opérations sont fastidieuses, difficiles et fatigantes puisque des efforts importants doivent occasionnellement être fournis. Elles exigent l'intervention de deux hommes. Les moments les plus délicats sont ceux du dépôt du module sur le chariot sans heurt, du retournement temporaire, et de l'accostage du module auquel il est assemblé, une précision de deux millimètres étant nécessaire. Il résulte que le procédé est d'assez longue durée.

US-A-2 825 477 décrit un chariot de partage d'un moteur d'aéronef comprenant un châssis à roues, deux bras verticaux extensibles, et un berceau soutenu par des axes transversaux au sommet des bras, sur lequel le moteur peut être posé et fixé, et qui tourne autour des axes transversaux de manière à avoir une inclinaison variable.

L'invention concerne un chariot de transport d'un genre particulier, spécialisé pour des modules de moteur d'aéronef et conçu pour faciliter leurs déplacements entre un lieu d'origine, pouvant correspondre à un poste de travail où ils ont été préparés, et un lieu de montage des modules voisins. Il satisfait à la contrainte particulière de devoir faire basculer temporairement le module pour s'assurer de son état.

Sous une forme générale, elle concerne un chariot de transport d'un module de moteur d'aéronef, comprenant d'abord un châssis à roues et une armature de réception du module installée sur le châssis, caractérisé en ce que l'armature comprend deux récepteurs du module disposés à deux côtés latéraux du chariot, les récepteurs comprenant chacun un bras mobile verticalement, un support à une extrémité supérieure du bras, le support tournant autour d'un axe transversal du chariot, un doigt de support du module, mobile sur le support dans une direction transversale du chariot, et un moyen de verrouillage du module sur le doigt.

Elle est de plus caractérisée encore par la combinaison de billes montées sur le châssis, sur lesquelles glisse l'armature, et de freins de serrage de l'armature sur le châssis.

Les doigts sont donc mobiles entre une position où ils sont approchés l'un de l'autre et où ils peuvent saisir le module et le soulever, et une position où ils sont escamotés, ce qui permet de placer commodément le module entre eux. Les moyens de verrouillage retiennent le module sur les doigts même quand le retournement des supports est produit. L'élévation des supports permet de saisir le module.

Il est possible d'obtenir de grandes rotations du module, suffisant à le tourner d'un quart de tour entre une position horizontale normale et une position verticale de chute des impuretés, par une commande directe de la rotation des axes auxquels les supports sont articulés aux bras, par un appareil de mise en rotation appartenant au bras quand l'axe appartient au support (ou vice-versa). Les doigts et les moyens de verrouillage sont agencés de façon à arrêter les mouvements de rotation intempestifs du module en coopérant avec les moyens d'appui du module qui sont en contact avec eux, par exemple grâce à des butées de faces planes ou des ajustements de sections polygonales imbriquées, notamment carrées.

La position du chariot pendant la réception ou l'enlèvement du module peut être réglée et maintenue en exploitant un dispositif de mise en position, qui peut consister en une découpe à bords obliques ou chanfreinés située à une face longitudinale du châssis et une butée fixe.

Un ajustement plus fin de la position du chariot ou plutôt de son armature, très utile pour placer correctement les supports, est donné par la combinaison des billes et des freins : 11 est alors possible ou d'immobiliser l'armature sur le châssis, ou de la déplacer sur lui dans n'importe quelle direction d'un plan avec toute la minutie qu'on peut souhaiter. En combinaison avec les bras mobiles verticalement, il est aussi possible de déplacer les supports dans toutes les directions de l'espace et de faciliter ainsi encore la saisie du module.

Selon une conception favorable de l'invention, les doigts sont tournants autour d'axes des supports. Quant aux moyens de verrouillage, ils peuvent comprendre des étriers à dispositif de fermeture, montés sur les doigts.

L'invention sera maintenant décrite plus en détail en liaison aux figures suivantes :
- la figure 1 est une vue générale du chariot et de son environnement,
- la figure 2 est une vue de détail représentant la jonction entre le châssis et l'armature,
- et la figure 3 est une vue de détail représentant plus particulièrement les moyens de support du module sur le chariot.

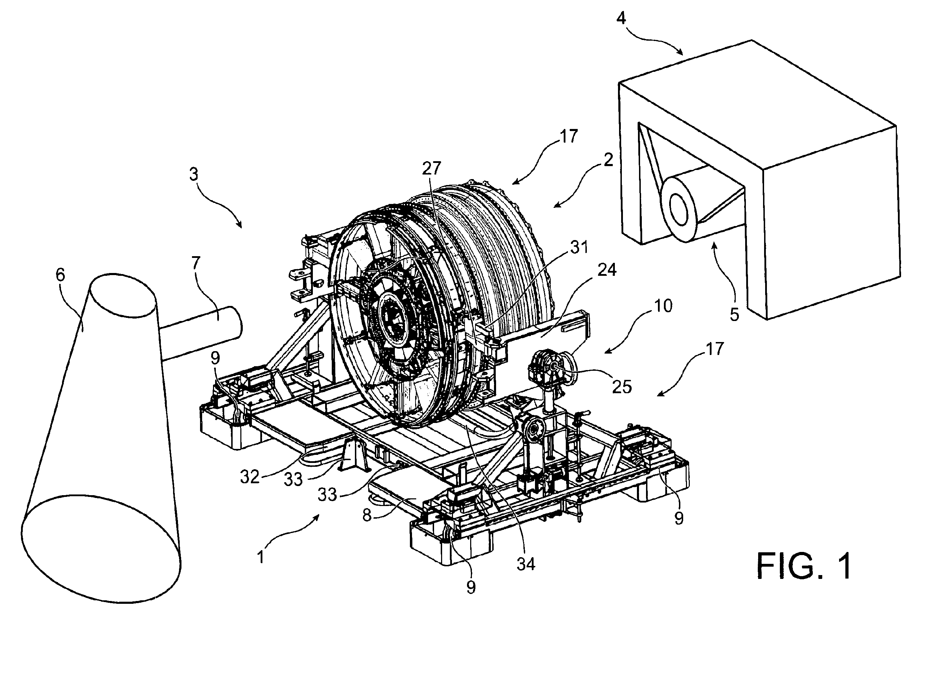

Le chariot porte la référence 1 sur la figure 1. Il porte alors le module 2, qui est ici un module majeur d'assemblage, à soufflante, d'un moteur d'aéronef. Le module 2 était auparavant monté sur un support fixe 3, et il doit être transporté sur le chariot 1 jusqu'à un portique 4 d'assemblage où il doit être accosté à un autre module 5, ou directement au portique 4. Le poste 3 est composé d'un support 6 duquel part une colonne 7 oblique sur laquelle le module 2 est enfilé au départ.

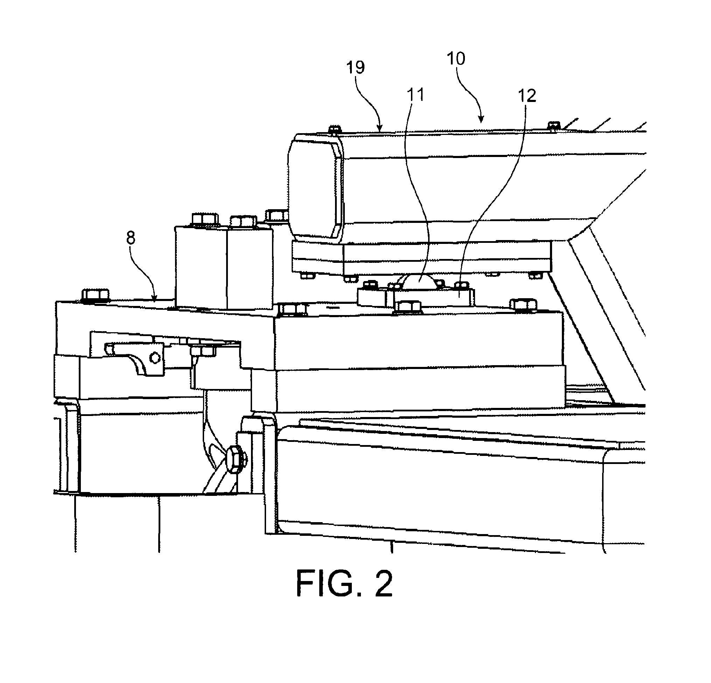

Le chariot 1 comprend un châssis 8 inférieur, des roues 9 montées sur un châssis 8 et permettant de déplacer le chariot 1, et une armature 10 montée sur le châssis 8. C'est par l'armature 10 que le module 2 repose sur le chariot 1. La figure 2 montre que l'armature 10 est montée glissante sur le châssis 8 en reposant par des pattes 19 à surface inférieure plane sur des billes 11 maintenues sur le châssis par des murets 12 qui les entourent. Cette conception permet de déplacer l'armature 10 avec minutie tout en laissant le châssis 8 immobile, pour placer avec une grande précision l'armature 10 par rapport au module 2, puis le module 2 par rapport au module voisin 5 ou au portique 4, et de faciliter ainsi les phases extrêmes du processus. Pendant le transport, l'armature 10 est toutefois maintenue solidaire du châssis 8 par des freins 13 les reliant, qui peuvent être des freins à sauterelle d'un genre connu, comprenant chacun une tige 14 mobile terminée par un patin 15 pouvant être pressé sous le châssis 8 sous l'action d'une manette 16 montée sur l'armature et consistant en un levier terminé par une came. Le châssis 8 et l'armature 10 sont pressés l'un sur l'autre quand les tiges 14 sont tirées. D'autres freins, non représentés, peuvent être ajoutés pour bloquer les roues 9.

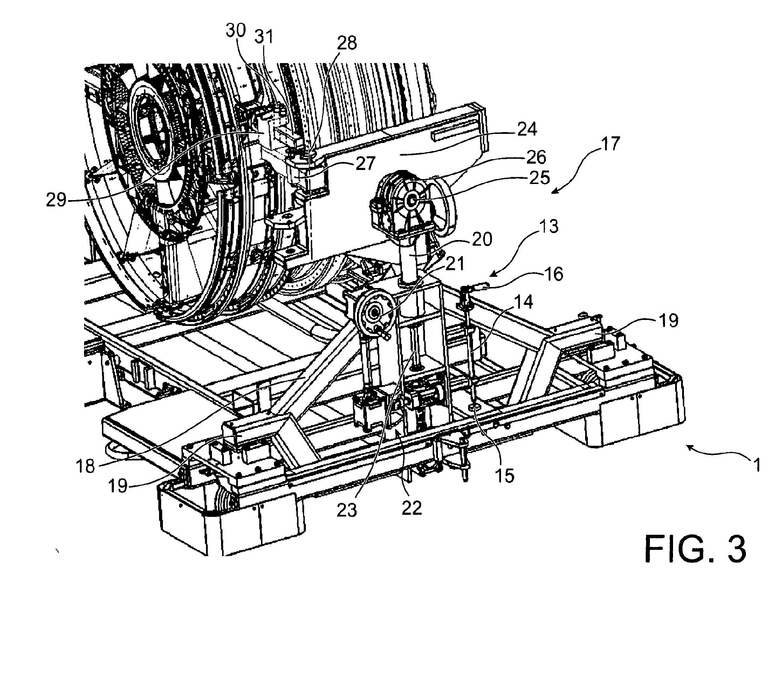

L'armature 10 porte, à chacun des côtés latéraux du chariot 1, un récepteur 17 du module 2 qu'on illustre plus en détail à la figure 3. Chaque récepteur 17 comprend un cadre 18 de poutres métalliques rigides en forme approximative de losange finissant aux pattes 19. Le cadre 18 porte en son centre un bras 20 dirigé verticalement et mobile en coulissant aussi verticalement sous l'action d'une manivelle 21 le commandant par une transmission 22 finissant sur une vis sans fin 23. Le sommet du bras 20 porte un support 24 en forme de plaque épaisse, dirigé dans un plan longitudinal du chariot 1 et articulé au bras 20 par un axe 25 appartenant au support 24, orienté dans la direction transversale du chariot 1 et qui peut être entraîné par une visseuse pneumatique 26 appartenant au bras 20 de manière à faire basculer le support 24 d'un quart de tour ou plus. Le support 24 porte, à une extrémité antérieure, un doigt 27 apte à tourner autour d'un axe 28 disposé, dans la position représentée, en direction verticale. Sa face supérieure porte un étrier 29 pouvant délimiter un volume fermé quand un dispositif de fermeture, consistant par exemple en des goupilles 30, est installé à travers ses branches. L'ouverture de l'étrier 29 est dirigée vers le centre du chariot 1 puis le doigt 27 est dirigé vers l'avant du chariot 1.

Le module 2 porte une paire de tiges 31 à section carrée, pointant dans les directions radiales opposées et sensiblement horizontales dans la position de départ, et qui appartiennent à des dispositifs, connus de l'homme du métier, qui peuvent être enfoncés dans le module 32 pour faciliter sa préhension, puis retirés. Les tiges 31 à section polygonale, ajustées dans les étriers 29 de section identique, retiennent fermement le module 2 et empêchent sa rotation intempestive.

Voici comment le chariot 1 est utilisé. Il est approché du poste 3, sur la colonne 7 duquel le module 2 se trouve à l'origine. La position du chariot 1 peut être ajustée par un avaloir 32 consistant en une découpe du châssis 8 à son bord antérieur et dans lequel pénètrent des reliefs 33 encastrés dans le sol à une position déterminée par rapport au poste 3 à mesure que le chariot 1 avance. Les limites latérales, obliques ou chanfreinées, de l'avaloir 32 glissent sur les reliefs 33 et centrent le chariot 1 par rapport au poste 3. Le mouvement d'approche est arrêté par une barre de butée 34 du chariot 1, solidaire d'un des supports 24, contre un point inférieur, non représenté, du module 2.

Le chariot 1 est alors tout près de la position de réception du module 2. Sa position est ajustée en déplaçant l'armature 10 sur les billes 11, puis en resserrant les freins 13. Les supports 24 sont ajustés en hauteur en déplaçant individuellement les bras 20. Les doigts 27 sont tournés d'une position où ils pointent vers l'avant du chariot 1 vers une position où ils pointent transversalement vers l'intérieur, l'un vers l'autre, et où les étriers 29 entourent les tiges 31. Les goupilles 30 sont placées pour immobiliser complètement ces dernières. Un petit mouvement ascendant des bras 10 permet de soulever le module 2 de la colonne 7, puis le chariot 1 peut être déplacé pour emporter le module 2. La visseuse pneumatique 26 est mise en service avant d'arriver au portique pour renverser le module 2 en plaçant son axe vertical et faire choir toute impureté pouvant s'être introduite entre son rotor et son stator. Un retournement inverse est ensuite effectué pour remettre le module 2 avec son axe de rotation horizontal. L'appui du module 2 étant produit par des faces planes des tiges 31 sur des faces planes des doigts 27, le retournement est fait sans obstacle. Le chariot 1 est placé adjacent au portique 4, l'avaloir 32 ou un avaloir analogue situé de l'autre côté longitudinal pouvant encore être exploité avec des reliefs analogues aux reliefs 33. La position du module 2 est ajustée en déplaçant à nouveau l'armature 20 par rapport au châssis 8, et en déplaçant les bras 10, pour que le module 2 accoste le module voisin 5 par ces mouvements dans toutes les directions; le montage des modules 2 et 5 peut s'ensuivre, après quoi les étriers 29 sont déverrouillés, et les doigts 27 sont retirés des tiges 31. Le chariot 1 est retiré. Aucun palan n'est utilisé. De façon exactement semblable, le module 2 pourrait être monté directement sur des éléments de support du portique 4, si aucun autre module n'y a encore été monté.

## Revendications

1. Chariot de transport (1) d'un module (2) de moteur d'aéronef, comprenant un châssis (8) à roues et une armature (10) de réception du module installée sur le châssis, **caractérisé en ce que** l'armature comprend deux récepteurs (17) du module, disposés à deux côtés latéraux du chariot, comprenant chacun un bras (20) mobile verticalement, un support (24) à une extrémité supérieure du bras et tournant autour d'un axe transversal du chariot, un doigt (27) de support du module, mobile sur le support dans une direction transversale du chariot, un moyen (29, 30) de verrouillage du module, et **en ce qu'**il comprend encore des billes (11) de support glissant de l'armature (10), qui sont montées sur le châssis (8), et des freins de serrage (13) de l'armature sur le châssis.

2. Chariot de transport d'un module de moteur d'aéronef selon la revendication 1, **caractérisé en ce que** les doigts (27) sont tournants autour d'axes (28) de support.

3. Chariot de transport d'un module de moteur d'aéronef selon la revendication 2, **caractérisé en ce que** les moyens de verrouillage comprennent des étriers (29) à dispositif de fermeture (30), montés sur les doigts.

4. Chariot de transport d'un module de moteur d'aéronef selon l'une quelconque des revendications 1 à 3, **caractérisé en ce que** le châssis (8) comprend un bord muni d'un dispositif de mise en position (32).

5. Chariot de transport d'un module de moteur d'aéronef selon la revendication 4, **caractérisé en ce que** le dispositif de mise en position consiste en une découpe du bord du châssis à limites latérales obliques ou chanfreinées.

6. Chariot de transport d'un module de moteur d'aéronef selon la revendication 4, **caractérisé en ce qu'**il comprend une butée (34) du module (2).

7. Chariot de transport d'un module de moteur d'aéronef selon la revendication 5, **caractérisé en ce qu'**il comprend une butée (34) du module (2).

## Patentansprüche

1. Transportwagen (1) für eine Einheit (2) eines Flugzeugtriebwerkes mit einem Rahmen (8) mit Rädern und einem auf dem Rahmen angebrachten Aufnahmegestell (10) für die Einheit, **dadurch gekennzeichnet, dass** das Gestell zwei Aufnahmen (17) für die Einheit aufweist, die zu beiden Seiten des Wagens angeordnet sind, und die jeweils folgendes aufweisen: einen vertikal beweglichen Arm (20), eine Halterung (24) an einem oberen Ende des Armes, die sich um eine Querachse des Wagens dreht, einen Zapfen (27) der Halterung der Einheit, die an der Halterung in einer Richtung quer zu dem Wagen beweglich ist, ein Verriegelungselement (29, 30) der Einheit, und dass er auch Kugellager (11) aufweist, die an dem Gestell (10) entlanggleiten und an dem Rahmen (8) montiert sind, und Einspannsicherungen (13) des Gestelles auf dem Rahmen.

2. Transportwagen für eine Einheit eines Flugzeugtriebwerkes nach Anspruch 1, **dadurch gekennzeichnet, dass** sich die Zapfen (27) um die Achsen (28) der Halterung drehen.

3. Transportwagen für eine Einheit eines Flugzeugtriebwerkes nach Anspruch 2, **dadurch gekennzeichnet, dass** die Verriegelungselemente Bügel (29) mit Schließvorrichtung (30) aufweisen, die an den Zapfen montiert sind.

4. Transportwagen für eine Einheit eines Flugzeugtriebwerkes nach einem der Ansprüche 1 bis 3, **dadurch gekennzeichnet, dass** der Rahmen (8) einen Rand bzw. eine Einfassung aufweist, der bzw. die mit einer Vorrichtung zum Positionieren (32) versehen ist.

5. Transportwagen für eine Einheit eines Flugzeugtriebwerkes nach Anspruch 4, **dadurch gekennzeichnet, dass** die Vorrichtung zum Positionieren einen Ausschnitt des Randes des Rahmens mit schrägen oder abgefasten seitlichen Begrenzungen aufweist.

6. Transportwagen für eine Einheit eines Flugzeugtriebwerkes nach Anspruch 4, **dadurch gekennzeichnet, dass** er einen Anschlag (34) für die Einheit (2) aufweist.

7. Transportwagen für eine Einheit eines Flugzeugtriebwerkes nach Anspruch 5, **dadurch gekennzeichnet, dass** er einen Anschlag (34) für die Einheit (2) aufweist.

## Claims

1. A carriage (1) for transporting an aircraft engine module (2), including a wheeled frame (8) and a template (10), installed model on the frame, for receiving, **characterised in that** the reinforcement structure includes two module receiving structures (17) positioned on two lateral sides of the carriage, each including a vertically moving arm (20), a bracket (24) at an upper end of the arm, rotating around a transverse axis of the carriage, a module support finger (27), which moves on the bracket in a transverse direction of the carriage, a means (29, 30) of locking the module and that it also includes balls (11) for sliding support of the template (10), which balls are installed on the frame (8), and clamps (13) to tighten the template on the frame.

2. A carriage for transporting an aircraft engine module according to claim 1, **characterised in that** the fingers (27) rotate around supporting axes (28).

3. A carriage for transporting an aircraft engine module according to claim 2, **characterised in that** the locking means include clamps (29) with closure devices (30), installed on the fingers.

4. A carriage for transporting an aircraft engine module according to any of claims 1 to 3, **characterised in that** the frame (8) includes an edge fitted with a positioning device (32).

5. A carriage for transporting an aircraft engine module according to claim 4, **characterised in that** the positioning device consists of a slot of the edge of the frame with oblique or bevelled lateral limits.

6. A carriage for transporting an aircraft engine module according to claim 4, **characterised in that** it includes a catch (34) to stop the module (2).

7. A carriage for transporting an aircraft engine module according to claim 5, **characterised in that** it includes a catch (34) to stop the module (2).
